# DEMANDE DE BREVET EUROPEEN

(11) **EP 1 902 880 A1**
(43) Date de publication de la demande: **26.03.2008**
(21) Numéro de dépôt: 07117001.3
(22) Date de dépôt: 21.09.2007
(51) Int. Cl.: B60J 1/20, B60J 7/00, B60R 5/04

(54) **Dispositif d'occultation à patins équipés de moyens de rappel, et véhicule automobile correspondant**

(30) Priorité: 22.09.2006 FR 0608408
(71) Demandeur: WAGON SAS, 79302 Bressuire Cédex (FR)
(72) Inventeur: Jincheleau, Michel, 79320 Moncoutant (FR)
(74) Mandataire: Bioret, Ludovic

(57) **Abrégé**

L'invention concerne un dispositif d'occultation pour véhicule automobile, comprenant au moins un élément d'occultation mobile entre une position repliée et au moins une position déployée, et présentant une barre de tirage portant à chacune de ses extrémités un patin monté dans un rail de guidage.

Selon l'invention, au moins un desdits patins présente des premiers moyens de rappel agissant sur ledit rails de guidage et pouvant prendre deux positions :
- une position de verrouillage dans laquelle ils agissent sur ladite barre de tirage et/ou ledit patin de façon que ladite barre de tirage et/ou ledit patin coopère avec un cran d'une crémaillère afin d'immobiliser ledit dispositif ;
- une position de déverrouillage de ladite barre de tirage et/ou dudit patin dans laquelle un utilisateur agit sur ladite barre de tirage pour s'opposer à la force de rappel desdits premiers moyens de rappel, de façon à libérer ladite barre de tirage et/ou ledit patin d'un cran de ladite crémaillère.

## Description

Le domaine de l'invention est celui des équipements intérieurs de véhicules automobiles.

Plus précisément, l'invention concerne les dispositifs d'occultation rétractables qu'un utilisateur peut déployer pour occulter au moins en partie une surface, par exemple vitrée. L'invention se rapporte ainsi notamment aux dispositifs d'occultation d'une surface vitrée pour se protéger des rayons du soleil, et par exemple aux dispositifs destinés à occulter un pavillon vitré.

L'invention peut s'appliquer également aux dispositifs d'occultation pour coffre à bagages, afin de dissimuler son contenu, encore appelés « cache-bagages ». L'invention peut aussi s'appliquer aux dispositifs de séparation du coffre et de l'habitacle d'un véhicule, parfois encore appelés « stop charge ».

### 2. Art antérieur

Une tendance actuelle, en matière de véhicule automobile, est de proposer de plus en plus de surfaces vitrées. Ainsi, notamment, on a proposé des véhicules présentant un pavillon équipé d'un ou plusieurs éléments vitrés. Dans certains cas, l'intégralité du pavillon est en verre ou en un matériau similaire laissant passer les rayons du soleil. Le pare-brise peut également se prolonger sur une partie du pavillon.

On a également proposé des surfaces vitrées multiples, par exemple sous la forme de deux ou trois éléments, dont certains peuvent former toits ouvrants. De la même façon, des surfaces vitrées importantes peuvent être prévues sur d'autres parties du véhicule, et par exemple à l'arrière, notamment lorsque le véhicule est équipé d'un hayon.

On prévoit donc alors des dispositifs d'occultation d'au moins une partie de la surface vitrée, notamment sous la forme d'un store à enrouleur ou d'un velum. Le dispositif d'occultation comprend une barre de tirage (qui, dans le cas d'un velum, peut correspondre simplement à un bord libre de celui-ci). La barre de tirage permet de faire passer un élément d'occultation (toile ou plaque) d'une position repliée à une ou plusieurs positions d'occultation (ou déployées).

Classiquement, les extrémités de la barre de tirage présentent des patins coulissant le long de rails de guidage solidarisés aux parois latérales du pavillon.

Ces patins permettent de maintenir le dispositif dans différentes positions déployées. Ils peuvent ainsi se verrouiller avec le rail par exemple en agissant par friction sur les parois du rail, ou bien comprendre un pêne susceptible de coopérer avec une gâche formée dans le rail, en des emplacements prédéterminés. Les patins peuvent être déverrouillés, pour permettre le déplacement de la barre de tirage, par exemple au moyen d'une poignée centrale prévue la barre de tirage.

Certaines normes de sécurité imposent qu'un tel dispositif ne se déplace pas, et soit donc maintenu dans la position qu'il occupe, sous l'effet d'une forte décélération du véhicule (la valeur seuil de la décélération étant fixée à 3G).

On a constaté que, lors d'une forte décélération du véhicule, les patins à verrouillage par friction de l'art antérieur se déplacent à l'intérieur des rails en présence de fortes décélérations du véhicule. Il en est de même lorsque l'on prévoit des crémaillères dans lesquelles la barre de tirage peut venir se bloquer dans une position déployée.

Les systèmes à pênes et gâches sont plus efficaces. Cependant, ils sont beaucoup plus complexes et donc plus coûteux, et en conséquence non adaptés à tous les véhicules.

Les mêmes situations se retrouvent dans les autres applications d'un dispositif d'occultation dans un véhicule automobile.

### 3. Objectifs de l'invention

L'invention a notamment pour objectif de pallier ces inconvénients de l'art antérieur.

Plus précisément, un objectif de l'invention est de fournir une telle technique qui permette de maintenir efficacement un dispositif d'occultation dans la position qu'il occupe, en présence d'une forte décélération du véhicule.

Un autre objectif de l'invention est de mettre en oeuvre une telle technique qui soit simple à manipuler et à déplacer, et qui ne nécessite pas de moyens complexes de verrouillage et de déverrouillage.

L'invention a encore pour objectif de fournir une telle technique qui soit fiable et robuste, et notamment, pour au moins certains modes de réalisation, qui permette un bon guidage de la barre de tirage.

Un autre objectif de l'invention est de proposer une telle technique qui soit simple à mettre en oeuvre et qui soit peu coûteuse.

### 4. Exposé de l'invention

Ces objectifs, ainsi que d'autres qui apparaîtront par la suite, sont atteints à l'aide d'un dispositif d'occultation pour véhicule automobile, comprenant au moins un élément d'occultation mobile entre une position repliée et au moins une position déployée, et présentant une barre de tirage portant à chacune de ses extrémités un patin monté dans un rail de guidage, ledit rail de guidage présentant au moins une première paroi s'étendant dans un premier plan sensiblement parallèle à l'axe défini par ledit rail et à l'axe défini par ladite barre de tirage, et au moins une seconde paroi s'étendant dans un second plan sensiblement perpendiculaire audit premier plan.

Selon l'invention, au moins un desdits patins présente des premiers moyens de rappel agissant sur une desdites premières parois d'un desdits rails de guidage et pouvant prendre deux positions :
- une position de verrouillage dans laquelle ils agissent sur ladite barre de tirage et/ou ledit patin de façon que ladite barre de tirage et/ou ledit patin coopère avec un cran d'une crémaillère afin d'immobiliser ledit dispositif ;
- une position de déverrouillage de ladite barre de tirage et/ou dudit patin dans laquelle un utilisateur agit sur ladite barre de tirage pour s'opposer à la force de rappel desdits premiers moyens de rappel, de façon à libérer ladite barre de tirage et/ou ledit patin d'un cran de ladite crémaillère.

Ainsi, l'invention repose sur une approche tout à fait nouvelle et inventive consistant à mettre en oeuvre des moyens de rappel aux extrémités de la barre de tirage d'un dispositif d'occultation, et qui, lorsqu'il occupe une position de repos, agissent sur les rails de guidage de celui-ci, de façon à ce que la barre de tirage coopère avec un cran d'une crémaillère. Ainsi, le dispositif, qui peut notamment être un store ou un vélum, est maintenu efficacement dans la position déployée qu'il occupe y compris dans le cas où le véhicule qu'il équipe subit une forte décélération.

Les moyens de rappel peuvent être forcés dans une position permettant le déplacement de la barre de tirage, dans laquelle un utilisateur agit sur la barre de tirage de façon à s'opposer à l'effort de rappel des moyens de rappel, afin de libérer les extrémités de la barre de tirage d'un des crans de la crémaillère.

Dans un mode de réalisation avantageux d'un dispositif d'occultation selon de l'invention, lesdits premiers moyens de rappel comprennent au moins une première lame ressort.

De façon préférée, lesdits premiers moyens de rappel comprennent deux premières lames ressort réparties de part et d'autre de l'axe longitudinal de ladite barre de tirage.

Cette approche permet une meilleure immobilisation du dispositif et de renforcer le maintien du dispositif en cas de forte décélération.

Avantageusement, lesdites lames ressort sont symétriques par rapport à l'axe de ladite barre de tirage.

Ceci permet d'améliorer l'équilibrage du dispositif.

Selon un mode de réalisation préférer du dispositif selon l'invention, au moins un desdits patins présente des seconds moyens de rappel agissant sur une desdites secondes parois.

Cette approche permet de compenser les jeux entre les extrémités de la barre de tirage et les rails de guidage. Elle permet également de contribuer à maintenir la barre de tirage perpendiculaire aux rails de guidage au cours du repli ou du déploiement du dispositif d'occultation.

Avantageusement, lesdits seconds moyens de rappel comprennent deux secondes lames ressort symétriques par rapport à l'axe de ladite barre de tirage.

La barre de tirage est alors correctement guidée le long des rails de guidage.

De façon préférentielle, lesdites secondes lames ressort sont réparties de part et d'autre de l'axe longitudinal de ladite barre de tirage.

Cette approche contribue à améliorer l'équilibrage du dispositif.

Avantageusement, ledit élément occultant appartient au groupe comprenant les vélums et les stores à enrouleur.

Selon une caractéristique avantageuse de l'invention, ledit élément d'occultation est destinée à occulter au moins une des surfaces suivantes :
- un pavillon vitré ;
- un pare-brise ;
- une vitre latérale ;
- une vitre arrière ;
- un coffre à bagages.

L'invention concerne également un véhicule automobile équipé d'un dispositif d'occultation selon l'invention.

### 5. Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
- la figure 1 présente un une vue de dessus d'une dispositif d'occultation selon l'invention, dans une position partiellement déployée.
- la figure 2 illustre un mode de réalisation d'un patin selon l'invention.
- la figure 3 est une vue en coupe d'une extrémité d'un dispositif d'occultation selon l'invention ;
- la figure 4 est une vue partielle d'un cadre de pavillon vitré présentant une crémaillère selon l'invention ;
- les figures 5a et 5b illustrent différent exemples de profils que peut présenter la crémaillère illustrée à la figure 4 ;
- la figure 6 illustre une vue en coupe d'une barre de tirage selon l'invention, présentant une extension inférieure susceptible de coopérer avec un cran d'une crémaillère ;
- La figure 7 illustre un mode de solidarisation d'une toile d'occultation à la barre de tirage au moyen d'une tringle et d'un ourlet;
- La figure 8 illustre un exemple de poignée permettant de manipuler facilement la barre de tirage d'un dispositif selon l'invention.

### 6. Description d'un mode de réalisation de l'invention

Le principe général de l'invention repose sur la mise en oeuvre de moyens de rappel aux extrémités de la barre de tirage d'un dispositif d'occultation, et qui, lorsqu'il occupe une position de repos, agissent sur les rails de guidage de celui-ci, de façon à ce que la barre de tirage coopère avec un cran d'une crémaillère. Ainsi, le dispositif, qui peut notamment être un store ou un vélum, est maintenu efficacement dans la position déployée qu'il occupe y compris dans le cas où le véhicule qu'il équipe subit une forte décélération.

Les moyens de rappel peuvent être forcés dans une position permettant le déplacement de la barre de tirage, dans laquelle un utilisateur agit sur la barre de tirage de façon à s'opposer à l'effort de rappel des moyens de rappel, afin de libérer les extrémités de la barre de tirage d'un des crans de la crémaillère.

### 6.1. Exemple d'architecture d'un dispositif d'occultation selon l'invention

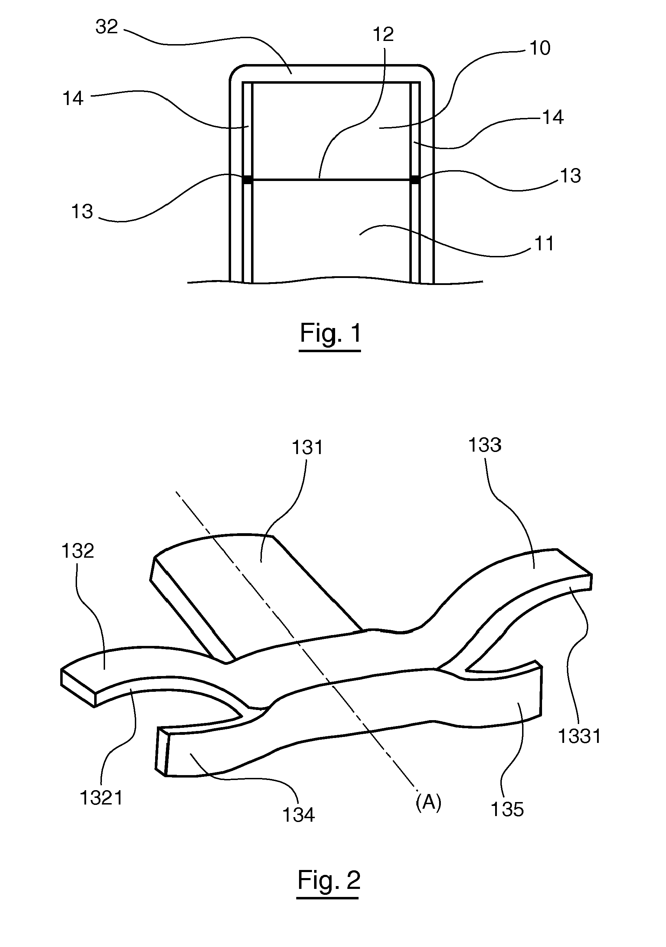

On présente, en relation avec la figure 1, un mode de réalisation d'un store pour pavillon vitré selon l'invention, dans une position partiellement déployée. Un tel store comprend un élément d'occultation 11 dont une extrémité est munie d'une barre de tirage 12. Chaque extrémité de la barre de tirage 12 est munie d'un patin 13 qui coulisse le long d'un rail de guidage 14 fixé au cadre 32 d'un pavillon vitré 10.

L'élément d'occultation 11 peut être formé d'une toile d'occultation dont une extrémité est solidaire d'un tube enrouleur (non représenté). Selon une variante, il peut également s'agir d'un élément d'occultation composé d'un ou plusieurs éléments rigides formant un vélum. Dans ce cas, la barre de tirage peut être directement formée dans, ou par, un des éléments rigides formant le vélum.

On présente en relation avec la figure 2 un mode de réalisation d'un patin 13 selon l'invention.

Un tel patin comprend une patte de fixation 131 destinée à coopérer avec une extrémité de la barre de tirage 12. Il comprend en outre des premiers moyens de rappel comprenant deux lames ressort supérieures 132, 133. Il comprend également des seconds moyens de rappel comprenant deux lames ressorts latérales 134, 135. Tel que cela apparaît sur la figure 2, les deux lames ressorts supérieures 132, 133 s'étendent de part et d'autre de la patte de fixation 131 et sont réparties symétriquement par rapport à l'axe longitudinal A du patin 13. Les lames ressort latérales 134, 135 s'étendent également de part et d'autre de la patte de fixation 131 et sont réparties symétriquement par rapport à l'axe longitudinal A du patin 13. Le patin 13 est préférentiellement réalisé dans un matériau plastique présentant des aptitudes au glissement et une élasticité adaptées, tout le moins en ce qui concerne la réalisation des lames ressort. Tout autre matériau adapté peut bien sur être mis en oeuvre pour la réalisation du patin 13.

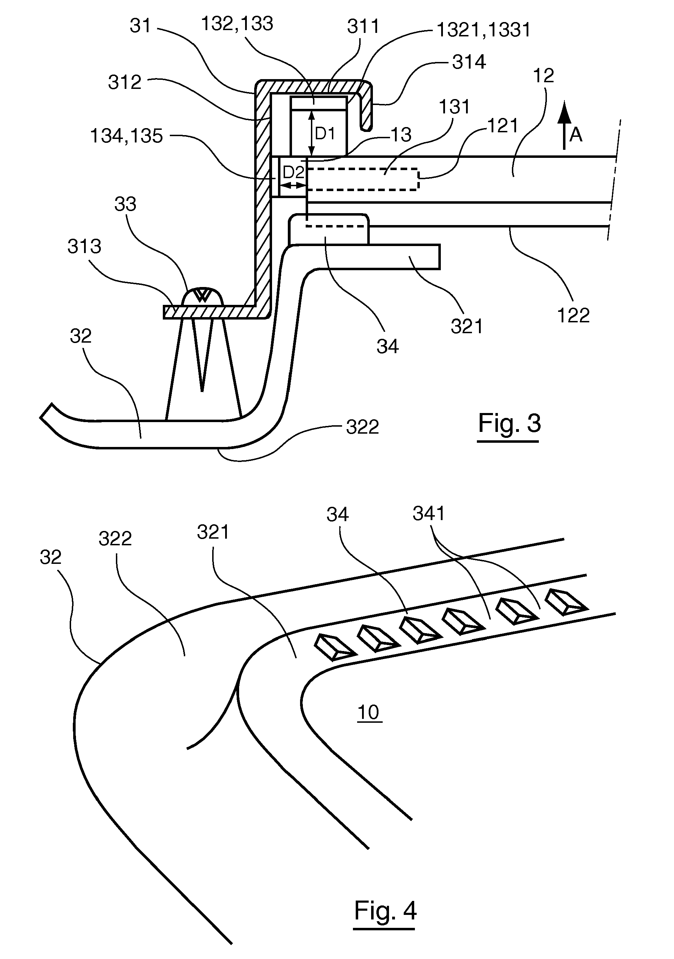

La figure 3 illustre une vue en coupe d'une extrémité d'un dispositif d'occultation selon l'invention.

Un patin 13 est solidarisé à chacune des extrémités de la barre de tirage 12. À cet effet, la patte de fixation 131 du patin 13 est introduite dans un logement 121 ménagé à chaque extrémité de la barre de tirage 12. La solidarisation des patins 13 à la barre de tirage 12 peut par exemple être renforcée par collage ou rivetage du patin ou par tout autre technique de solidarisation adaptée.

Un rail de guidage 31 s'étend le long de deux côtés 322 du cadre 32 selon un axe parallèle à l'axe longitudinal du véhicule. Il présente un pied de fixation 313 qui permet de le fixer au cadre 32, par exemple au moyen de plusieurs vis 33. Chaque rail 31 présente une paroi de guidage supérieure 311 et une paroi de guidage latérale 312, ainsi qu'une patte recourbée formant butée 314. Dans d'autres modes de réalisation, la section du rail peut être sensiblement différente, et les parois peuvent être formés par des zones particulières du rail (par exemple, si cette section est sensiblement circulaire, on distingue cependant des zones supérieure, inférieure et latérales, jouant le même rôle que les parois listées ci-dessus).

La paroi de guidage supérieure 311 s'étend dans un premier plan sensiblement parallèle à l'axe défini par le rail 31 et à l'axe défini par la barre de tirage 12. La paroi de guidage latérale 312 s'étend selon un plan sensiblement perpendiculaire au premier plan. La butée 314 s'étend sensiblement parallèlement à la paroi latérale 312.

Dans un mode de réalisation particulier, chaque rail 31 est réalisé dans un alliage d'aluminium. D'autre matériau peuvent bien sûr être mis en oeuvre.

Les lames ressort supérieures 132, 133 du patins sont destinées à venir en contact avec la paroi supérieure 311 des rail 31. Les lames ressort latérales 134, 135 sont destinées à venir en contact avec la paroi latérale 312 des rails 31. La butée 314, avec laquelle les champs 1321, 1331 des lames ressort supérieures 132, 133 sont susceptibles de rentrer en contact, permet d'éviter que le patin 13 sorte du rail 31.

Les points d'appui respectifs de chaque lame ressort 132, 133,134, 135 sur les parois de guidage supérieure 311 et latérale 312 sont décalés des extrémités de la barre de tirage 12. Ces décalages sont représentés par les flèches D1 et D2. Ils permettent d'assurer que les lames ressort 132, 133,134, 135 agissent correctement sur la paroi supérieure 311 et sur la paroi latérale 312 du rail 31.

Une crémaillère 34 s'étend sur portion horizontale 321, de chaque côté du cadre 32, selon un axe parallèle à l'axe longitudinal du véhicule.

Telle que cela apparaît plus clairement à la figure 4, la crémaillère 34 présente une succession de crans 341. La crémaillère 34 peut être réalisée dans un matériau plastique ou métallique ou dans tout autre matériau adapté.

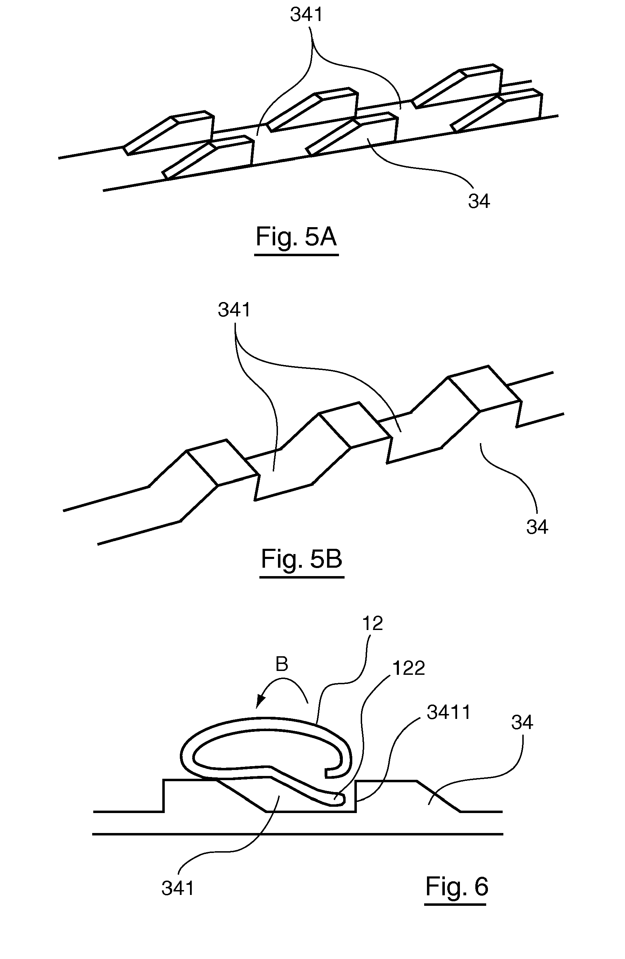

Les figures 5a et 5b illustrent deux exemples de profils que peut présenter la crémaillère 34. D'autres profils peuvent bien sur être mis en oeuvre.

La barre de tirage 12 présente une extension inférieure 122. Cette extension inférieure 122 apparaît plus clairement sur la figure 6. L'extension inférieure 122 est susceptible de venir se loger dans des crans 341 de la crémaillère 34 et venir en butée contre la paroi verticale 3411 de chaque cran 341.

### 6.2. Fonctionnement d'un dispositif d'occultation selon l'invention

Les lames ressort supérieures 132, 133 peuvent prendre une position de verrouillage illustrée à la figure 3. Dans cette position, les lames ressort supérieures 132, 133 de chaque patin 13, en appui sur la paroi de guidage supérieure 311 de chaque rail de guidage 13, agissent sur chaque extrémité de la barre de tirage 12 de façon que l'extension inférieure 122 de la barre de tirage 12 vienne se loger dans un cran 341 de chaque crémaillère 34. De cette façon, la barre de tirage 12 est immobilisée et l'élément d'occultation 11 est correctement maintenu dans une position déployée prédéterminée.

Dans une telle position, si le véhicule équipé par le dispositif d'occultation subit une forte décélération, l'extension inférieure 122 vient en butée contre la paroi verticale 3411 de chaque cran 341 dans lequel elle est logée, de sorte que la barre de tirage 12 est bloquée et que l'élément d'occultation 11 ne se replie pas. Le fait que le dispositif reste immobilisé durant une forte décélération du véhicule permet d'éviter les risques d'accident au niveau du store.

Les lames ressort latérales 134, 135, en appui sur la paroi de guidage latérale 312 de chaque rail 31 agissent sur la barre de tirage 12 de façon à compenser les jeux pouvant exister entre les rails de guidage 31 et les extrémité de la barre de tirage 12.

Les lames ressort supérieures 132, 133 peuvent prendre une position de déverrouillage de façon à permettre le repli ou le déploiement de l'élément d'occultation 11.

Les lames ressort supérieures 132, 133 passent dans la position de déverrouillage lorsqu'un utilisateur agit sur la barre de tirage de façon à s'opposer à la force de rappel des lames ressort supérieures 132 ,133. À cet effet, un utilisateur peut translater la barre de tirage 12 selon la flèche A de façon à comprimer les lames ressort supérieures 132, 133 le long de la paroi de guidage supérieure 311 de chaque rails 31, jusqu'à ce que l'extension inférieur 122 de la barre de tirage 12 se libère des crans 341 avec lesquels elle coopère. L'utilisateur peut alors replier ou déployer l'élément d'occultation 11 de façon à le placer dans la position repliée ou dans une position déployée prédéterminée.

Au cours du déploiement ou du repli de l'élément occultant 11, l'action des lames ressort supérieures 132, 133 et des lames ressort latérales 134, 135 qui sont engagées dans chaque rail de guidage 31 et qui agissent respectivement sur les parois de guidage supérieures 311 et sur les parois de guidage latérales 312, permet d'assurer un bon guidage de la barre de tirage 12 et notamment de la maintenir perpendiculaire au rails de guidage 31.

Une rotation de la barre de tirage 12 selon la flèche B peut également permettre le passage des lames ressort supérieures 132, 133 dans la position de déverrouillage, et de libérer l'extension inférieure 122 des crans 341 avec lesquels elle coopère. La rotation de la barre de tirage selon la flèche B permet de faciliter le déploiement de l'élément d'occultation du fait qu'elle permet de maintenir l'extension inférieure 122 sensiblement à l'horizontale de façon qu'elle glisse à la surface de la crémaillère 34. Dans d'autres modes de réalisation, la rotation peut être remplacée par, ou combinée avec, une translation, ou un décalage, de la barre de tirage.

Après qu'il a placé l'élément d'occultation 11 dans une position déployée prédéterminée désirée (ou dans la position repliée), l'utilisateur relâche la barre de tirage 12 de façon que les lames ressort supérieures 132, 133 passent dans leur position de verrouillage et que la barre de tirage soit de nouveau correctement bloquée.

La technique selon l'invention décrite dans ces modes de réalisation porte sur un dispositif d'occultation de pavillon vitré. Elle peut tout aussi bien être appliquée à l'occultation d'un pare-brise, d'une vitre latérale, d'une vitre arrière, ou d'un coffre à bagages au moyen de stores à enrouleur ou de vélums.

### 6.3. Autres caractéristiques

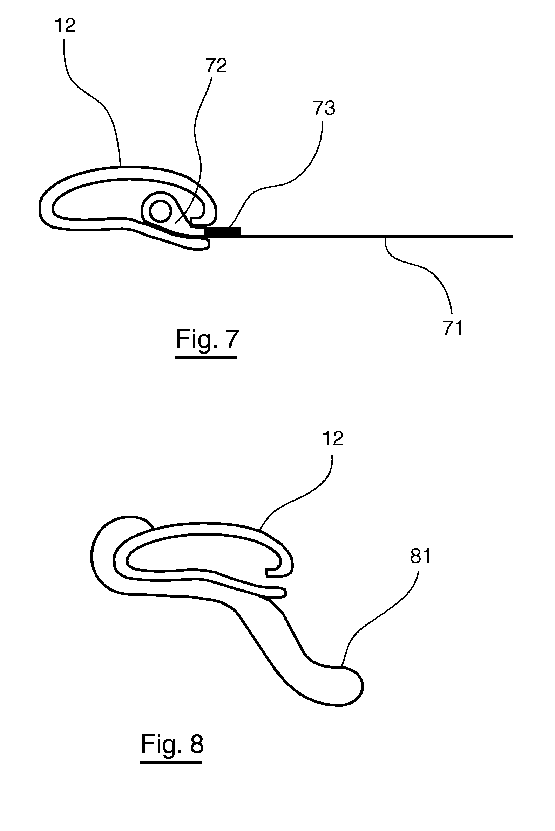

La figure 7 illustre un mode de solidarisation d'une toile d'occultation 71 à la barre de tirage 12 au moyen d'une tringle 72 et d'un ourlet 73.

La figure 8 illustre un exemple de poignée 81 permettant de manipuler facilement la barre de tirage 12.

## Revendications

1. Dispositif d'occultation pour véhicule automobile, comprenant au moins un élément d'occultation (11) mobile entre une position repliée et au moins une position déployée, et présentant une barre de tirage (12) portant à chacune de ses extrémités un patin (13) monté dans un rail de guidage (14, 31),
ledit rail de guidage (14, 31) présentant au moins une première paroi (311) s'étendant dans un premier plan sensiblement parallèle à l'axe défini par ledit rail (14, 31) et à l'axe défini par ladite barre de tirage (12), et au moins une seconde paroi (312) s'étendant dans un second plan sensiblement perpendiculaire audit premier plan,
**caractérisé en ce qu'**au moins un desdits patins (13) présente des premiers moyens de rappel (132, 133) agissant sur une desdites premières parois (311) d'un desdits rails de guidage (14, 31) et pouvant prendre deux positions :
- une position de verrouillage dans laquelle ils agissent sur ladite barre de tirage (12) et/ou ledit patin (13) de façon que ladite barre de tirage (12) et/ou ledit patin (13) coopère avec un cran (341) d'une crémaillère (34) afin d'immobiliser ledit dispositif ;
- une position de déverrouillage de ladite barre de tirage (12) et/ou dudit patin (13) dans laquelle un utilisateur agit sur ladite barre de tirage (12) pour s'opposer à la force de rappel desdits premiers moyens de rappel (132, 133), de façon à libérer ladite barre de tirage (12) et/ou ledit patin (13) d'un cran (341) de ladite crémaillère (34).

2. Dispositif selon la revendication 1, **caractérisé en ce que** lesdits premiers moyens de rappel (132, 133) comprennent au moins une première lame ressort (132, 133).

3. Dispositif selon la revendication 2, **caractérisé en ce que** lesdits premiers moyens de rappel (132, 133) comprennent deux premières lames ressort (132, 133) réparties de part et d'autre de l'axe longitudinal de ladite barre de tirage (12).

4. Dispositif selon la revendication 3, **caractérisé en ce que** lesdites lames ressort (132, 133) sont symétriques par rapport à l'axe de ladite barre de tirage (12).

5. Dispositif selon l'une quelconques des revendications 1 à 4, **caractérisé en ce qu'**au moins un desdits patins (13) présente des seconds moyens de rappel (134, 135) agissant sur une desdites secondes parois (312).

6. Dispositif selon la revendication 5, **caractérisé en ce que** lesdits seconds moyens de rappel (134, 135) comprennent deux secondes lames ressort (134, 135) symétriques par rapport à l'axe de ladite barre de tirage (12).

7. Dispositif selon la revendication 6, **caractérisé en ce que** lesdites secondes lames ressort (134, 135) sont réparties de part et d'autre de l'axe longitudinal de ladite barre de tirage (12).

8. Dispositif selon l'une quelconques des revendications 1 à 7, **caractérisé en ce que** ledit élément occultant (11) appartient au groupe comprenant les vélums et les stores à enrouleur.

9. Dispositif selon l'une quelconque des revendications 1 à 8, **caractérisé en ce que** ledit élément d'occultation (11) est destinée à occulter au moins une des surfaces suivantes :
- un pavillon vitré ;
- un pare-brise ;
- une vitre latérale ;
- une vitre arrière ;
- un coffre à bagages.

10. Véhicule automobile, **caractérisé en ce qu'**il est équipé d'au moins un dispositif d'occultation selon l'une quelconque des revendications 1 à 9.
